(19) Europäisches Patentamt
European Patent Office
Office européen des brevets

(11) **EP 3 432 043 A1**

(12) **DEMANDE DE BREVET EUROPEEN**

(43) Date de publication:
**23.01.2019 Bulletin 2019/04**

(21) Numéro de dépôt: **18183046.4**

(22) Date de dépôt: **12.07.2018**

(51) Int Cl.:
*G02B 6/30* (2006.01)          *G02B 6/122* (2006.01)
*G02B 6/14* (2006.01)          *G02B 6/12* (2006.01)
*G02B 6/26* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **17.07.2017 FR 1756772**

(71) Demandeur: **Commissariat à l'énergie atomique et aux énergies alternatives**
**75015 Paris (FR)**

(72) Inventeurs:
• **BOUTAMI, Salim**
**38100 GRENOBLE (FR)**
• **HASSAN, Karim**
**89470 MONETEAU (FR)**

(74) Mandataire: **Brevalex**
**95, rue d'Amsterdam**
**75378 Paris Cedex 8 (FR)**

(54) **DISPOSITIF DE FOCALISATION OPTIQUE À PSEUDO-GRADIENT D'INDICE**

(57)   L'invention porte sur un dispositif de couplage optique d'un premier guide d'onde, par exemple un guide multimode, et d'un deuxième guide d'onde, par exemple un guide monomode. Le dispositif est formé dans une couche coeur et comprend une structure de focalisation (SF) apte à convertir un faisceau lumineux d'un mode cible du premier guide d'onde à un mode cible du deuxième guide d'onde. La structure de focalisation comprend une pluralité de tranchées (T1-T4) pratiquées dans la couche coeur pour créer un pseudo-gradient d'indice de réfraction à même de réaliser la conversion du faisceau lumineux du mode cible du premier guide d'onde au mode cible du deuxième guide d'onde.

L'invention s'étend à un circuit photonique comprenant un guide d'onde monomode, un guide d'onde multimode et un dispositif selon l'invention pour coupler le guide d'onde monomode et le guide d'onde multimode. Le guide d'onde multimode peut comporter un réseau de couplage surfacique en vue d'un couplage avec une fibre optique.

FIG. 1

**Description**

**DOMAINE TECHNIQUE**

Le domaine de l'invention est celui des structures de guidage de la lumière sur silicium micro-nano-structuré trouvant application en photonique et en optoélectronique. L'invention concerne plus particulièrement la réalisation d'une jonction entre un guide monomode et un guide multimode, une telle jonction étant par exemple destinée à permettre l'injection/l'extraction de lumière vers/depuis le guide d'onde monomode depuis/vers une fibre optique au moyen d'un réseau de couplage surfacique intégré au guide d'onde multimode.

**ÉTAT DE LA TECHNIQUE ANTÉRIEURE**

La propagation de signaux optique sur puce nécessite un bon compromis entre pertes et compacité. En fonction de l'application visée, le chemin optique total peut varier entre quelques millimètres pour une fonction unique (émission, modulation, filtrage, photo-détection) et plusieurs centimètres pour les circuits les plus complexes. Dans ce contexte, la photonique sur silicium constitue, en plus de la compatibilité avec l'électronique, une plateforme extrêmement efficace grâce à l'important contraste d'indice des guides coeur/gaine silicium/silice qui offre un fort confinement de la lumière dans de petites dimensions avec des pertes linéaires de propagation très basses.

Pour les circuits les plus longs, l'utilisation de guides larges (au-dessus de la limite de mono-modicité) permet de gagner un ordre de grandeur sur les pertes optiques. De plus, l'utilisation de guides larges permet une extraction de lumière vers des fibres optiques avec un bon taux de couplage via un réseau de couplage réalisant un accord de taille de mode entre le mode fondamental du guide et le mode de la fibre.

Mais hormis ces fonctions pour lesquelles les guides larges multimodes sont préférables, le traitement de l'information (routage avec virages rapides, filtrage, démultiplexage, résonateurs) est essentiellement réalisé au moyen de guides monomodes, ce qui permet de contrôler les processus d'interférences et de limiter les pertes par courbure.

Il est donc nécessaire de réaliser, à plusieurs endroits de la puce, des jonctions entre guides monomodes et guides multimodes, pour profiter des avantages de chaque type de guide. Dans ces jonctions, on cherche à s'assurer que le guide multimode reste excité sur son mode fondamental (ce qui est nécessaire pour ensuite venir réaliser un nouveau couplage vers un guide monomode, ou réaliser une extraction de lumière vers une fibre optique avec un profil gaussien), et ne soit pas excité sur ses modes supérieurs. Mais une telle jonction sans modification du profil du mode gaussien requiert une longueur importante pour éviter d'exciter les modes supérieurs du guide multimode.

On connait ainsi, par exemple du document [1] cité à la fin de la description, des transitions adiabatiques entre un guide monomode et un guide multimode qui consistent en une variation très lente de la largeur d'un guide d'onde à ouverture progressive (*taper*) du guide monomode au guide multimode pour rester sur le mode fondamental du guide multimode. De telles transitions requièrent une longueur de l'ordre de $500 \mu m$ pour un couplage vers fibre.

Une alternative à ces transitions adiabatiques, très spécifique aux réseaux de couplage vers fibre, consiste à laisser diverger le mode fondamental pour élargir le faisceau de lumière, de manière à atteindre une taille importante compatible avec la fibre. Dans ce cas, on ne reste pas sur le mode fondamental, mais le profil est sensiblement gaussien. Un réseau de couplage elliptique est cependant requis pour extraire la lumière car le front d'onde est lui-même elliptique. La transition à ouverture progressive présente alors, pour les applications télécom, une longueur de $50 \mu m$ environ. Un exemple d'une telle alternative est par exemple présenté dans le document [2] cité à la fin de la description.

Il a par ailleurs été proposé dans le document [3] cité à la fin de la description d'équiper un guide d'onde à ouverture progressive d'une lentille permettant de focaliser le mode fondamental d'un guide multimode au mode d'un guide monomode, et réciproquement. La lentille est formée par gravure entre les deux guides. Un gain en compacité est observé, avec une longueur de la transition de l'ordre de $15 \mu m$ pour les télécom.

Cette dernière solution ne peut cependant être améliorée en soi. En effet, la lentille présente un rayon R sensiblement égal à la demi-largeur du guide multimode. Si on voulait réduire ce rayon R, il faudrait graver davantage la zone entre les deux guides pour dévier plus fortement la lumière à l'aide d'un plus fort écart d'indice. Mais ce fort contraste d'indice occasionnerait alors nécessairement des réflexions non désirées, et donc une baisse du taux de couplage.

C'est pourquoi, pour garder un compromis entre compacité et taux de couplage, on ne peut pas diminuer la focale bien en dessous de la largeur du guide multimode, c'est-à-dire typiquement $10 \mu m$. En ajoutant le rayon de la lentille à cette focale, la longueur d'un tel dispositif de couplage guide monomode-guide multimode à lentille de focalisation est de l'ordre de $15 \mu m$. En tout état de cause, avec cette approche, la longueur d'encombrement reste supérieure à la largeur du guide multimode si l'on veut assurer un bon taux de couplage.

## EXPOSÉ DE L'INVENTION

L'invention a pour objectif de proposer un dispositif de couplage permettant de convertir sur une courte distance la lumière du mode d'un guide monomode au mode fondamental d'un guide multimode, typiquement sur une longueur inférieure à la largeur du guide multimode, tout en offrant un taux de couplage important.

A cet effet, l'invention propose un dispositif de couplage optique d'un guide d'onde multimode et d'un guide d'onde monomode. Le dispositif est formé dans une couche coeur. Il comprend une structure de focalisation qui comporte une pluralité de tranchées pratiquées dans la couche coeur pour créer un pseudo-gradient d'indice de réfraction à même de réaliser la conversion du faisceau lumineux d'un mode cible du guide d'onde multimode au mode du guide d'onde monomode.

Certains aspects préférés mais non limitatifs de ce dispositif sont les suivants :

- il présente une symétrie par rapport à un plan, dit plan central, perpendiculaire à la couche coeur et dont l'intersection avec la couche coeur comprend une direction de propagation de la lumière, et chaque tranchée présente une longueur le long de la direction de propagation et une largeur transversalement à la direction de propagation, et dans lequel la largeur des tranchées est modulée d'une tranchée à l'autre ;
- la largeur des tranchées augmente d'une tranchée à l'autre depuis le plan central ;
- la largeur de chaque tranchée est invariante le long de la direction de propagation ;
- les tranchées sont pratiquées de façon telle qu'un indice de réfraction moyen local de la section de focalisation décroit dans le plan transverse de manière parabolique depuis le plan central ;
- les tranchées sont agencées périodiquement dans le plan transverse ;
- la couche coeur est réalisée en un matériau coeur d'indice de réfraction $n_c$, et les tranchées ont un indice de réfraction $n_b$ inférieur à l'indice de réfraction $n_c$ de la couche coeur;
- la section de focalisation présente une portion non structurée entre une extrémité des tranchées et le guide d'onde monomode ;
- la section de focalisation est délimitée par un pourtour qui présente, en séquence du guide monomode vers le guide d'onde multimode, une première partie à ouverture progressive et une deuxième partie à ouverture constante ;
- la longueur de la structure de focalisation dans la direction de propagation est inférieure à la largeur du premier guide d'onde.

L'invention s'étend à un circuit photonique comprenant un guide d'onde multimode, un guide d'onde monomode et un dispositif de couplage optique selon l'invention pour coupler le guide d'onde multimode et le guide d'onde monomode. Le guide d'onde multimode peut comporter un réseau de couplage surfacique avec une fibre optique.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 est une représentation schématique, en vue de dessus, d'un dispositif de couplage optique selon l'invention ;
- la figure 2 est une représentation schématique, selon un plan de coupe transverse, du dispositif de couplage optique de la figure 1 ;
- la figure 3 est une représentation schématique, en vue de dessus, d'un dispositif de couplage optique selon une variante de réalisation de l'invention ;
- la figure 4 est un graphique représentant l'évolution du taux de couplage d'un dispositif conforme à l'invention en fonction de la longueur de la structure de focalisation dans la direction de propagation ;
- la figure 5 représente la distribution de champ électromagnétique dans un dispositif selon l'invention réalisant le couplage d'un guide monomode de 350nm de large à un guide multimode de 3$\mu$m de large au moyen d'une structure de focalisation de 1,9$\mu$m de long.

## EXPOSÉ DÉTAILLÉ DE MODES DE RÉALISATION PARTICULIERS

L'invention concerne un dispositif de couplage optique compact permettant un couplage efficace d'un premier guide d'onde (typiquement un guide multimode) et d'un deuxième guide d'onde (typiquement un guide monomode). Les sections du premier et du deuxième guide d'onde, dans un plan transverse à une direction de propagation de la lumière, présentent des dimensions différentes. Le premier guide d'onde est par exemple plus large que le deuxième guide d'onde.

L'invention s'avère pertinente pour assurer des transitions vers des guides larges et sur plusieurs gammes de longueurs d'onde, répondant aux exigences des applications datacom/télécom (dans l'infra-rouge) et des applications capteurs (dans l'infra-rouge moyen ou large) où l'empreinte sur puce est encore plus importante aux grandes longueurs d'ondes.

Une application possible, mais non limitative de l'invention, est celle de l'injection/l'extraction de lumière vers/depuis un guide d'onde monomode depuis/vers une fibre optique au moyen d'un réseau de couplage surfacique intégré à un guide d'onde multimode.

Le dispositif de couplage optique selon l'invention est adapté pour transmettre un rayonnement lumineux quasi monochromatique du premier guide d'onde vers le deuxième guide d'onde, et vice-versa. Par rayonnement lumineux quasi monochromatique, on entend un rayonnement lumineux comprenant une bande spectrale d'étendue $\Delta\lambda<\lambda/10$ centrée sur une longueur d'onde centrale $\lambda$. La longueur d'onde centrale $\lambda$ peut être comprise entre 1260 nm et 1360 nm, par exemple 1310 nm, ou entre 1530 nm et 1580 nm, par exemple 1550nm.

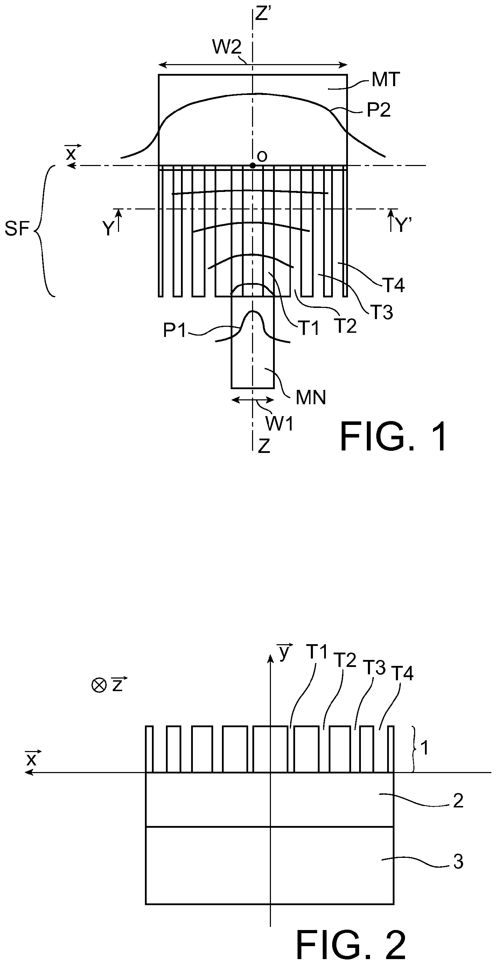

En référence aux figures 1 et 2, le dispositif de couplage optique selon l'invention réalise le couplage d'un premier guide d'onde MT et d'un deuxième guide d'onde MN au moyen d'une structure de focalisation SF apte à convertir un faisceau lumineux d'un mode cible du premier guide d'onde à un mode cible du deuxième guide d'onde monomode, et vice-versa.

Sans que cela soit limitatif de l'invention, on prendra dans ce qui suit l'exemple d'un premier guide d'onde MT de type guide multimode et d'un deuxième guide d'onde MN de type guide monomode. Dans un tel exemple, le mode cible du premier guide d'onde est l'un des modes du guide multimode, typiquement son mode fondamental, et le mode cible du deuxième guide d'onde est le mode (fondamental) du guide d'onde monomode.

Chacun des guides d'onde MN, MT présente au voisinage de leur couplage une section rectiligne, les sections rectilignes des guides s'étendant selon une direction de propagation de la lumière Z-Z'.

Le guide d'onde monomode MN, le guide d'onde multimode MT et la structure de focalisation SF sont formés dans une couche coeur 1 qui présente une épaisseur Ec, et est faite d'un matériau d'indice de réfraction $n_c$ associé à un indice effectif de mode de couche de coeur planaire $n_{eff}$. La couche coeur 1 est une couche de confinement d'un rayonnement lumineux quasi-monochromatique de longueur d'onde $\lambda$ susceptible d'être guidé par les guides d'onde MN, MT et le dispositif de couplage optique.

La couche coeur 1 est par exemple une couche superficielle d'un substrat silicium-sur-isolant SOI (pour Silicon On Insulator). Comme représenté sur la figure 2, la couche coeur 1 est alors séparée d'un substrat de silicium 3 par une couche d'oxyde enterrée 2. L'épaisseur Ec de la couche coeur est par exemple de 300 nm.

La couche coeur 1 comprend deux faces, dites respectivement face avant et face arrière, essentiellement parallèles entre elles, et en contact avec des milieux d'indice de réfraction inférieur à l'indice de réfraction nc. Reprenant l'exemple de la figure 2, la face arrière est en contact avec la couche d'oxyde enterré 2, typiquement en $SiO_2$, et la face avant est en contact avec l'air.

Le dispositif de couplage optique présente une symétrie par rapport à un plan, dit plan central, perpendiculaire à la couche coeur 1 et dont l'intersection avec la couche coeur 1 comprend la direction de propagation Z-Z'. Dans le trièdre de centre O et de vecteurs directeurs $\vec{x}$, $\vec{y}$ et $\vec{z}$ représenté sur la figure 2 et où $\vec{z}$ s'étend selon la direction de propagation Z-Z', le plan central correspond au plan (yOz), c'est-à-dire le plan passant par O et ayant pour vecteurs directeurs $\vec{y}$ et $\vec{z}$.

Dans un plan transverse au plan central et perpendiculaire aux faces de la couche coeur (plan parallèle au plan (xOy) passant par O et de vecteurs directeurs $\vec{x}$, $\vec{y}$), le guide d'onde monomode MN s'étend sur un distance (largeur) W1 et le guide d'onde multimode MT s'étend sur une distance (largeur) W2 supérieure à la limite de mono-modicité et donc supérieure à la largeur W1 du guide d'onde monomode MN. La largeur W1 du guide d'onde monomode MN est par exemple de 350nm et la largeur W2 du guide d'onde multimode MT est par exemple de $3\mu m$.

La structure de focalisation SF de la lumière est formée par structuration de la couche coeur, par exemple au niveau d'une portion d'extrémité du guide d'onde multimode abutée au guide d'onde monomode. Elle présente une largeur dans un plan transverse au plan central et perpendiculaire aux faces de la couche coeur (plan parallèle au plan (xOy) passant par la structure de focalisation) au plus identique (de préférence identique comme c'est le cas sur la figure 1) à celle W2 du guide d'onde multimode MT.

La structure de focalisation SF comprend une région à pseudo-gradient d'indice issue d'une structuration de la couche coeur 1. Par pseudo-gradient d'indice, on entend dans le cadre de l'invention que la structure de focalisation ne comporte pas un véritable profil de variation d'indice de réfraction du matériau coeur comme c'est le cas des structures dite « graded-index », mais qu'elle en présente les mêmes propriétés. Ainsi lors de son passage dans la structure de focalisation, la lumière rencontre l'équivalent d'une lentille de focalisation.

Avec une telle région à pseudo-gradient d'indice, la lumière se retrouve déviée de telle manière que la lumière issue du guide d'onde monomode MN se focalise au guide d'onde multimode MT, et vice-versa. Le pseudo-gradient d'indice est tel que l'indice décroit de part et d'autre du plan central (yOz) dans le plan transverse référencé Y-Y' sur la figure 1. Ainsi, l'indice moyen est globalement fort au centre, ce qui ralentit la lumière, alors qu'il est plus faible sur les côtés, ce qui accélère la lumière.

Sur la figure 1, les références P1 et P2 représentent respectivement le profil gaussien du mode du guide monomode MN et celui du mode fondamental du guide multimode MT. Les courbes au niveau de la structure de focalisation SF représentent quant à elles l'évolution du front d'onde (isophases) qui, partant du guide d'onde multimode MT, se courbe petit à petit au fur et à mesure que la lumière se propage vers le guide d'onde monomode en étant ralentie au centre et accélérée sur les côtés. L'ensemble de la lumière arrive donc en même temps en étant focalisé sur le guide d'onde monomode. On prévoit ainsi préférablement une décroissance parabolique de l'indice de réfraction de part et d'autre du plan central.

La structuration de la couche coeur 1 pour créer le pseudo-gradient d'indice consiste à y former une pluralité de tranchées T1-T4 d'indice de réfraction $n_b$ inférieur à l'indice de réfraction $n_c$ du matériau de la couche coeur 1. La différence entre les indices de réfraction du coeur et des tranchées est de préférence au moins égal à 0,2.

Chaque tranchée présente une profondeur (dimension selon $\vec{y}$), une longueur (dimension selon $\vec{z}$) et une largeur (dimension selon $\vec{x}$). Les tranchées présentent une même profondeur. Cette profondeur est typiquement inférieure ou égale à l'épaisseur de la couche coeur. Elle peut même être supérieure à l'épaisseur de la couche coeur avec les tranchées venant se prolonger dans la gaine.

Les tranchées peuvent être exposées à l'air ou comblées d'un matériau de remplissage, par exemple du $SiO_2$, d'indice inférieur à celui du matériau de la couche coeur.

Les tranchées T1-T4 sont pratiquées dans la couche coeur à partir de la face avant de la couche coeur perpendiculaire au plan central, typiquement par gravure. Lorsque les guides sont de type en arête, les tranchées peuvent être réalisées en même temps que la formation de l'arête, en une seule gravure. Leur profondeur est alors inférieure à l'épaisseur de la couche coeur. Elles peuvent aussi s'étendre sur la totalité de la couche coeur (avec une autre étape de gravure), être restreintes à l'arête ou s'étendre sur les côtés de l'arête également. Dans le cas de guides ruban, la profondeur des tranchées peut plus aisément correspondre à l'épaisseur de la couche coeur.

Les tranchées T1-T4 s'étendent dans la direction de propagation Z-Z' de sorte que la lumière se propage le long de la plus grande dimension des tranchées. La largeur des tranchées est modulée d'une tranchée à l'autre dans le plan transverse Y-Y'. La largeur des tranchées vient plus précisément augmenter d'une tranchée à l'autre depuis le plan central. Comme indiqué précédemment, les tranchées sont pratiquées de façon telle qu'un indice de réfraction moyen local de la section de focalisation décroit de préférence dans le plan transverse de manière parabolique depuis le plan central.

Le guide d'onde monomode MN est de préférence centré sur une tranchée ou sur une ligne de matériau de la couche coeur (un espace inter-tranchées) selon que le nombre de lignes est respectivement pair ou impair (cf. figures 1 et 2).

Dans le mode de réalisation représenté sur la figure 1, les tranchées présentent une même longueur L, i.e. les lignes de matériau de la couche coeur (les espaces inter-tranchées correspondant aux portions non gravées de la couche coeur entre deux tranchées adjacentes) présentent une même longueur que ces lignes soient fines (sur les côtés) ou larges (au centre).

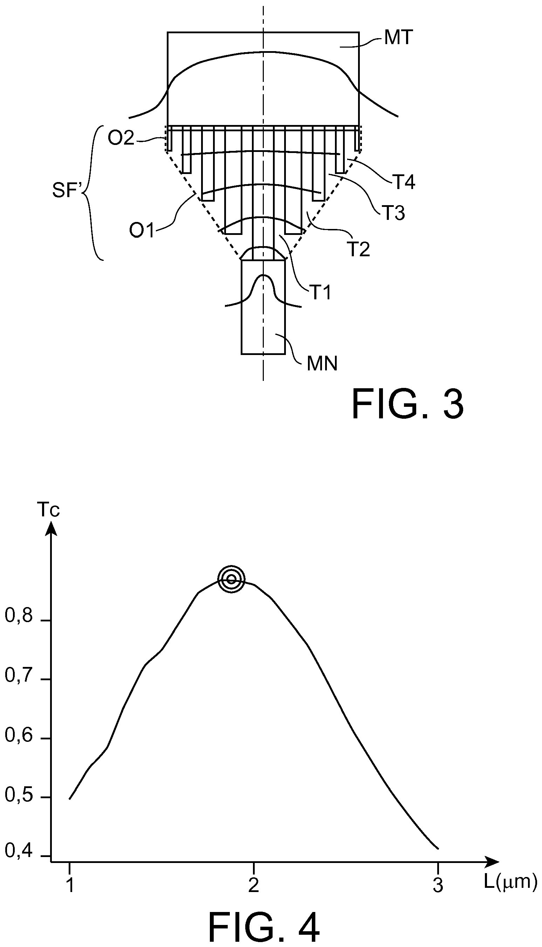

Dans une variante de réalisation représentée sur la figure 3, les lignes fines sont plus courtes (selon Z-Z') que les lignes larges. Cela n'impacte pas la fonction de focalisation puisque, partant du guide monomode, les lignes fines ne voient pas la lumière dans un premier temps. En revanche, la tenue mécanique s'en trouve améliorée. Dans cette variante, la section de focalisation SF' est délimitée par un pourtour qui présente, selon un plan parallèle aux faces de la couche coeur et en séquence du guide monomode vers le guide multimode, une première partie O1 à ouverture progressive (la largeur de la section de focalisation augmente en direction du guide d'onde multimode) et une deuxième partie à ouverture constante O2 (la largeur de la section de focalisation reste constante en direction du guide d'onde multimode).

La largeur initiale de la première partie O1 à ouverture progressive est de préférence supérieure à la largeur du guide d'onde monomode MN. En effet, le mode du guide monomode s'étend latéralement au-delà du coeur, et une telle largeur initiale permet à l'intégralité du profil du mode de profiter du gradient d'indice.

Le mode fondamental du guide d'onde multimode MT déborde quant à lui pas ou peu latéralement. De sorte que la largeur de la section de focalisation dans la deuxième partie à ouverture constante O2 est de préférence égale à la largeur W2 du guide d'onde multimode, puisqu'il ne s'avère pas utile de prévoir une largeur plus importante.

Dans un mode de réalisation possible, la section de focalisation présente une portion non structurée entre une extrémité des tranchées et le guide monomode. Cette portion non structurée peut ainsi être une courte région, par exemple inférieure à 1$\mu$m de long, au niveau de laquelle les lignes, et notamment les lignes fines, sont jointes entre elles du côté du guide monomode. Ce mode de réalisation offre l'avantage d'une tenue mécanique améliorée, sans venir engendrer de réflexions parasites.

Dans un mode de réalisation possible, les tranchées sont agencées périodiquement dans le plan transverse Y-Y' selon un pseudo-réseau de période P (les centres de chaque espace inter-tranchée sont espacés d'une distance P). Cette distance P est inférieure à la longueur d'onde $\lambda$, de préférence inférieure à $\lambda/2$ et encore plus de préférence inférieure à λ/4.

Avec une focalisation de la lumière du guide multimode vers le guide monomode, un trajet lumineux d'origine x sur l'axe $\vec{Ox}$ parcourt une distance $\sqrt{L^2+x^2}$, et pour réaliser une égalisation des temps de trajets on a la relation approximative suivante (en venant approximer l'indice vue par la lumière parcourant la distance $\sqrt{L^2+x^2}$ comme étant la moyenne $\frac{\tilde{n}(x)+\tilde{n}(0)}{2}$) : $\frac{2\pi}{\lambda}\left(\frac{\tilde{n}(x)+\tilde{n}(0)}{2}\right)\sqrt{L^2+x^2} = \frac{2\pi}{\lambda}\tilde{n}(0)L,$ avec $\tilde{n}$(x) l'indice moyen local qui ne dépend que de x puisque les tranchées et les lignes non gravées sont invariantes dans la direction de propagation de la lumière. On déduit de la relation précédente :

$$\tilde{n}(x) = \tilde{n}(0)\frac{\left(2L-\sqrt{L^2+x^2}\right)}{\sqrt{L^2+x^2}}.$$

Une relation entre l'indice moyen local $\tilde{n}$(x) et la largeur e(x) des lignes non gravées est donnée par

$$\tilde{n}(x) = \sqrt{\frac{e(x)}{P}n_{eff}^2 + \left(1-\frac{e(x)}{P}\right)n_b^2},$$

où n$_{eff}$ désigne l'indice effectif du mode de la couche de coeur planaire et n$_b$ désigne l'indice du matériau des tranchées (qui peut être de l'air).

On en déduit la loi d'évolution symétrique, selon x, de la largeur des lignes :

$$e(x) = \frac{\left[e(0).n_{eff}^2+(P-e(0)).n_b^2\right]*\frac{\left(2L-\sqrt{L^2+x^2}\right)^2}{L^2+x^2}-Pn_b^2}{n_{eff}^2-n_b^2}.$$

Dans le cas d'une nombre impair de lignes, on peut alors fixer e(0) (la largeur de la ligne centrale) à la plus grande valeur technologiquement possible pour pouvoir graver une tranchée de largeur t1 telle que P=e(0)+t1, puis venir adapter la longueur L pour que les lignes les plus fines de largeur e(W2/2) (=e(-W2/2)) restent également réalisables technologiquement. En procédant de la sorte, il est possible de définir une structure de focalisation la plus compacte possible.

Une telle loi d'évolution peut permettre de définir un dimensionnement initial, que l'on peut ensuite optimiser par logiciel, par exemple en exploitant un modèle numérique dit FDTD (« Finite Différence Time Domain Method »).

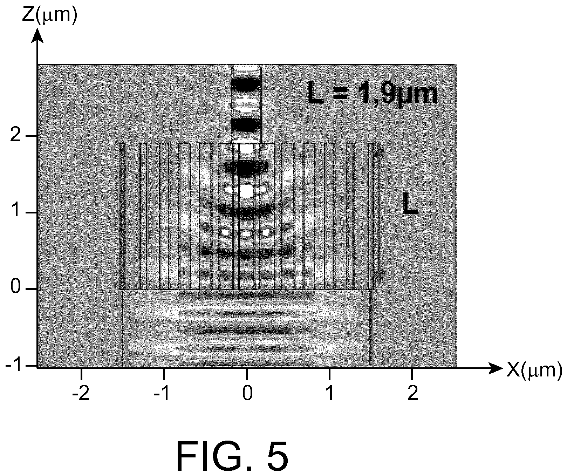

Afin d'en estimer les performances, le comportement du dispositif de couplage optique selon l'invention a été simulé en 3D selon un tel modèle numérique FDTD. Dans cette simulation, la longueur d'onde centrale est λ=1.31μm, la pseudo-période du réseau de tranchées est P=250nm, le guide multimode a une largeur W2=3μm et le guide mono-mode a une largeur W1=350nm. La plus large ligne centrale a une largeur e(0)=0.8*P, tandis que les lignes extérieures les plus petites ont une largeur e(W2/2)=0.2*P. La couche coeur est une couche de silicium de 300nm d'épaisseur qui repose sur une couche de SiO2 d'un substrat SOI. Les tranchées sont exposées à l'air. La polarisation étudiée est TM (champ électrique orienté perpendiculairement au plan de la figure 5), associée à un indice effectif neff de 3.12.

Dans cette simulation, la longueur L de la structure de focalisation a été variée pour déterminer la longueur adéquate pour une transition optimale entre le mode fondamental du guide multimode et le mode du guide monomode (et vice-versa, le dispositif de couplage fonctionnant bien évidemment dans les deux sens). La figure 4 représente ainsi l'évolution du taux de couplage Tc en fonction de la longueur L de la structure de focalisation. Cette figure 4 montre un taux de couplage très important de 87% pour une longueur L inférieure à 2μm, alors que le guide multimode fait 3μm de large. L'invention permet ainsi d'atteindre une compacité telle que la longueur de la structure de focalisation est inférieure à la largeur du guide multimode.

Comme on le voit sur la figure 5, le dispositif selon l'invention est compact, tout en ayant une bonne transmission. En effet, la lumière, lorsqu'elle passe du guide monomode au guide multimode, voit d'abord la ligne centrale de largeur élevée et donc d'indice local proche de celui du guide monomode, puis progressivement seulement s'étale pour aller vers des indices locaux plus faibles. Cette diminution de l'indice local vu par la lumière est très progressive, ce qui évite des réflexions, contrairement à la lentille décrite dans le document [3]. On notera qu'avec un guide multimode de largeur 10μm, comme c'est le cas dans le document [3], la longueur optimale du dispositif de focalisation selon l'invention serait approximativement de 6,3 μm (1,9μm*10/3), bien inférieure à la longueur de 16μm mentionnée dans le document [3].

L'invention n'est pas limitée au dispositif de couplage précédemment décrit mais s'étend également à un circuit photonique comprenant un premier guide d'onde, un deuxième guide d'onde et un dispositif selon l'invention pour coupler le premier guide d'onde et le deuxième guide d'onde. Le premier guide d'onde peut comporter un réseau de couplage surfacique en vue d'un couplage avec une fibre optique.

**RÉFÉRENCES**

[1] D. Taillaert et al., "Grating Couplers for Coupling between Optical Fibers and Nanophotonic Waveguides", Japanese Journal of Applied Physics 45.8R (2006)
[2] G. Denoyer et al., "Hybrid Silicon Photonic Circuits and Transceiver for 50 Gb/s NRZ Transmission Over Single-Mode Fiber", Journal of Lightwave Technology 33.6 (2015)
[3] K. Van Acoleyen et al., "Compact lens-assisted focusing tapers fabricated on silicon-on-insulator", IV Photonics (GFP), 2001, 8th IEEE, pp. 7-9 (2011)

**Revendications**

**1.** Dispositif de couplage optique d'un guide d'onde multimode (MT) et d'un guide d'onde monomode (MN), comprenant une structure de focalisation (SF, SF') apte à convertir un faisceau lumineux d'un mode cible du guide d'onde multimode au mode du guide d'onde monomode,
le dispositif de couplage optique étant formé dans une couche coeur (1) et étant **caractérisé en ce que** la structure de focalisation comprend une pluralité de tranchées (T1-T4) pratiquées dans la couche coeur pour créer un pseudo-gradient d'indice de réfraction à même de réaliser la conversion du faisceau lumineux du mode cible du guide d'onde multimode au mode du guide d'onde monomode.

**2.** Dispositif selon la revendication 1, présentant une symétrie par rapport à un plan, dit plan central, perpendiculaire à la couche coeur (1) et dont l'intersection avec la couche coeur comprend une direction de propagation de la lumière (Z-Z'), dans lequel chaque tranchée présente une longueur le long de la direction de propagation et une largeur transversalement à la direction de propagation, et dans lequel la largeur des tranchées est modulée d'une tranchée à l'autre.

**3.** Dispositif selon la revendication 2, dans lequel la largeur des tranchées augmente d'une tranchée à l'autre depuis le plan central.

**4.** Dispositif selon l'une des revendications 2 et 3, dans lequel la largeur de chaque tranchée est invariante le long de la direction de propagation

**5.** Dispositif selon la revendication 3, dans lequel les tranchées sont pratiquées de façon telle qu'un indice de réfraction moyen local de la section de focalisation décroit dans le plan transverse de manière parabolique depuis le plan central.

**6.** Dispositif selon l'une des revendications 2 à 5, dans lequel les tranchées sont agencées périodiquement dans le plan transverse.

**7.** Dispositif selon l'une des revendications 1 à 6, dans lequel la couche coeur est réalisée en un matériau coeur d'indice de réfraction $n_c$, et les tranchées ont un indice de réfraction $n_b$ inférieur à l'indice de réfraction $n_c$ de la couche coeur.

**8.** Dispositif selon l'une des revendications 1 à 7, dans lequel la section de focalisation présente une portion non structurée entre une extrémité des tranchées et le guide d'onde monomode.

**9.** Dispositif selon l'une des revendications 1 à 7, dans lequel la section de focalisation (SF') est délimitée par un pourtour qui présente, en séquence du guide d'onde monomode vers le guide d'onde multimode, une première partie (O1) à ouverture progressive et une deuxième partie (O2) à ouverture constante.

**10.** Dispositif selon l'une des revendications 1 à 9, dans lequel la longueur (L) de la structure de focalisation dans la direction de propagation est inférieure à la largeur du guide d'onde multimode.

**11.** Circuit photonique comprenant un guide d'onde multimode, un guide d'onde monomode et un dispositif selon l'une des revendications 1 à 10 pour coupler le guide d'onde multimode et le guide d'onde monomode.

**12.** Circuit photonique selon la revendication 11, dans lequel le guide d'onde multimode comporte un réseau de couplage

surfacique.

Z'

W2

MT

P2

x⃗

O

SF

Y↑        ↑Y'

T4

T3

T1  T2

P1

MN

W1

Z

# FIG. 1

⊗z⃗

y⃗  T1 T2 T3 T4

x⃗                1

                  2

                  3

# FIG. 2

# FIG. 3

# FIG. 4

FIG. 5

**Europäisches Patentamt**

**European Patent Office**

**Office européen des brevets**

# RAPPORT DE RECHERCHE EUROPEENNE

Numéro de la demande

EP 18 18 3046

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 102 36 800 B3 (FRAUNHOFER GES FORSCHUNG [DE]) 29 janvier 2004 (2004-01-29)<br>* figures 2, 3 *<br>* alinéa [0012] *<br>* alinéa [0028] - alinéa [0030] *<br>----- | 1-12 | INV.<br>G02B6/30<br>G02B6/122<br>G02B6/14<br>G02B6/12<br>G02B6/26 |
| A | US 2009/116802 A1 (KONDOU KATSUTOSHI [JP] ET AL) 7 mai 2009 (2009-05-07)<br>* figures 4a, 5, 6 *<br>* alinéas [0054] - [0059] *<br>----- | 1-12 | |
| X | US 2003/035633 A1 (AGARWAL ANURADHA M [US] ET AL) 20 février 2003 (2003-02-20)<br>* figures 2a, 2c, 2d, 3a, 4 *<br>* alinéas [0009], [0024], [0025], [0029] - [0031] *<br>----- | 1-12 | |
| X | US 7 329 050 B1 (DUGAN MARK A [US] ET AL) 12 février 2008 (2008-02-12)<br>* figure 5 *<br>* colonne 10, ligne 42 - colonne 12, ligne 8 *<br>----- | 1-12 | DOMAINES TECHNIQUES RECHERCHES (IPC)<br><br>G02B |
| X | US 2006/204175 A1 (LAURENT-LUND CHRISTIAN [DK] ET AL) 14 septembre 2006 (2006-09-14)<br>* figure 3.b *<br>* alinéas [0035], [0037], [0103], [0109] *<br>----- | 1-12 | |
| A | WO 02/29905 A1 (ALIGNED TECHNOLOGIES INC [KR]; KO HAN JUN [KR]; CHOI MIN HO [KR]; CHUN) 11 avril 2002 (2002-04-11)<br>* figures 4, 5 *<br>* revendications 1-5 *<br>----- | 1-12 | |

Le présent rapport a été établi pour toutes les revendications

| Lieu de la recherche | Date d'achèvement de la recherche | Examinateur |
|---|---|---|
| La Haye | 13 novembre 2018 | Zakynthinos, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 18 18 3046

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-11-2018

| Document brevet cité au rapport de recherche | | Date de publication | Membre(s) de la famille de brevet(s) | | | Date de publication |
|---|---|---|---|---|---|---|
| DE 10236800 | B3 | 29-01-2004 | AU | 2003263133 | A1 | 19-03-2004 |
| | | | DE | 10236800 | B3 | 29-01-2004 |
| | | | WO | 2004021057 | A1 | 11-03-2004 |
| US 2009116802 | A1 | 07-05-2009 | CN | 101410750 | A | 15-04-2009 |
| | | | EP | 2006732 | A2 | 24-12-2008 |
| | | | JP | 4847176 | B2 | 28-12-2011 |
| | | | JP | 2007264487 | A | 11-10-2007 |
| | | | TW | I431348 | B | 21-03-2014 |
| | | | US | 2009116802 | A1 | 07-05-2009 |
| | | | WO | 2007111083 | A1 | 04-10-2007 |
| US 2003035633 | A1 | 20-02-2003 | AU | 2002305424 | A1 | 18-11-2002 |
| | | | US | 2003035633 | A1 | 20-02-2003 |
| | | | WO | 02091051 | A2 | 14-11-2002 |
| US 7329050 | B1 | 12-02-2008 | AUCUN | | | |
| US 2006204175 | A1 | 14-09-2006 | EP | 1656573 | A1 | 17-05-2006 |
| | | | US | 2006204175 | A1 | 14-09-2006 |
| | | | WO | 2005017588 | A1 | 24-02-2005 |
| WO 0229905 | A1 | 11-04-2002 | AU | 9243001 | A | 15-04-2002 |
| | | | KR | 20020028069 | A | 16-04-2002 |
| | | | WO | 0229905 | A1 | 11-04-2002 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Littérature non-brevet citée dans la description**

- **D. TAILLAERT et al.** Grating Couplers for Coupling between Optical Fibers and Nanophotonic Waveguides. *Japanese Journal of Applied Physics 45.8R,* 2006

- **G. DENOYER et al.** Hybrid Silicon Photonic Circuits and Transceiver for 50 Gb/s NRZ Transmission Over Single-Mode Fiber. *Journal of Lightwave Technology 33.6,* 2015
- Compact lens-assisted focusing tapers fabricated on silicon-on-insulator. **K. VAN ACOLEYEN et al.** IV Photonics (GFP). IEEE, 7-9